# EUROPÄISCHE PATENTANMELDUNG

(11) **EP 2 497 727 A2**
(43) Veröffentlichungstag der Anmeldung: **12.09.2012**
(21) Anmeldenummer: 12157909.8
(22) Anmeldetag: 02.03.2012
(51) Int. Cl.: B65G 49/00

(54) **Tablar mit klappbarer Stütze**

(30) Priorität: 11.03.2011 DE 102011005396
(71) Anmelder: Krones AG, 93073 Neutraubling (DE)
(72) Erfinder: Dittmaier, Klaus, 97225 Zellingen (DE); Wegener, Kai, 81379 München (DE)
(74) Vertreter: Grünecker, Kinkeldey, Stockmair & Schwanhäusser

(57) **Zusammenfassung**

Ein Tablar zum Transport von Gütern (14), insbesondere Getränkegebinden, auf einem Transportmedium (6), mit einem Basiselement (1) mit einer Auflagefläche (2) für das Transportgut (14), bei dem an dem Basiselement (1) eine klappbare Stütze (3) zur Stützung des Transportgutes (14) angebracht ist.

## Beschreibung

Die Erfindung betrifft ein Tablar zum Transport von Transportgütern auf einem Transportmedium wie zum Beispiel einem Transportband oder Rollband.

Tablare sind Behälter oder Fördermittel, die eingesetzt werden, um beim Transport von Gegenständen die Transporteigenschaften von Gegenständen von den Eigenschaften der Fördermedien wie zum Beispiel Förderbänder unabhängig zu gestalten. Sie sind im Stand der Technik zumeist flach ausgebildet und verfügen oft über einen Rand, um ein Herabrutschen der beförderten Gegenstände zu verhindern. Einsatzbereiche für Tablare sind zum Beispiel in der Getränkeindustrie zum Transport von Getränkegebinden oder ähnlichen, aber auch am Flughafen, wenn Gegenstände zum Durchleuchten auf einem Förderband durch ein Röntgengerät befördert werden.

Ein typisches Problem bei Tablaren nach bekanntem Stand der Technik taucht auf, wenn Gegenstände transportiert werden, die über einen hohen Schwerpunkt verfügen. Diese neigen im Falle von Beschleunigung oder ruckelndem Transport zum Umfallen oder auch Herabfallen vom Tablar, was den Förderablauf stört.

Der Erfindung liegt die Aufgabe zugrunde, dieses Problem zu beheben und dabei gleichzeitig vorteilhafte Eigenschaften eines Tablares wie zum Beispiel eine platzsparende Aufbewahrungsform des Tablares zu erhalten.

Diese Aufgabe wird gelöst durch ein Tablar nach Anspruch 1. Vorteilhafte Ausführungsformen der Erfindung sind in den abhängigen Ansprüchen offenbart.

Die Stütze ist klappbar an dem Basiselement des Tablars befestigt. Die Höhe der Stütze kann entsprechend den Eigenschaften der Transportgegenstände gewählt werden.

Durch die klappbare Stütze können die Transportgüter, die auf der Auflagefläche liegen, abgestützt werden. Dadurch können sie beispielsweise bei plötzlichen Beschleunigungen oder ruckelnder Fortbewegung stabilisiert werden. So können viele Störungen des Förderablaufes durch umgekippte oder vom Tablar herab gefallene Transportgüter vermieden werden. Eine klappbare Stütze ist besonders im Fall von Transportgütern mit einem hohen Schwerpunkt interessant, da ihre Höhe im aufgeklappten Zustand bis zur Höhe des Schwerpunktes oder darüber hinaus gehen kann. Sie kann daher auch Transportgüter mit einem hohen Schwerpunkt stabilisieren. Da sie nach dem Transport eingeklappt werden kann, können Nachteile, die sich bei Lagerung aufgrund einer hohen Stütze ergeben könnten, vermieden werden.

Ein platzsparendes Lagern eines Tablares gemäß der Erfindung wird dadurch erleichtert oder ermöglicht, dass die Stütze einklappbar ist, wenn die Tablare gerade nicht benötigt werden. Ein Tablar mit eingeklappter Stütze benötigt oft nicht mehr Lagervolumen als ein Tablar ohne Stütze. Auch eine Stapelung von mehreren gleichartigen Tablaren kann so ermöglicht werden.

Mit Basiselement wird das Grundelement des Tablars ohne Stütze oder andere optionale Teile bezeichnet, das mit einer Seite auf dem Transportmedium oder einem Auflagemedium aufliegt und das auf der dem Transport- oder Auflagemedium gegenüberliegenden Seite über eine Fläche verfügt, auf der das Transportgut aufliegt und die als Auflagefläche bezeichnet wird.

In einer bevorzugten Ausführungsform ist die Auflagefläche zur Stütze hin geneigt ausgebildet. Durch diese Neigung kann auf die speziellen Eigenschaften des Transportgutes, Erfordernisse aufgrund des Transportmediums oder -pfades, und/oder Erfordernisse bei Be- und Entladung Rücksicht genommen werden. Die Neigung der Auflagefläche kann beim verwendeten Tablar an die Erfordernisse des typischerweise transportierten Gegenstandes angepasst sein. Sie kann einen Neigungswinkel im Bereich der Werte zwischen einer unteren Grenze von einem der Werte von (knapp) über 0°, oder 10°, 20°, 30°, 40° und einer oberen Grenze von einem der Werte von 10°, 20°, 30°, 40° und 45° haben. Es kann sinnvoll sein, für verschiedenartige Transportgegenstände Tablare mit verschieden geneigten Auflageflächen vorrätig zu halten. Ein Transportgut kann durch die Neigung auch in die der Stütze gegenüberliegenden Richtung stabilisiert werden. Beispielsweise wird es sich durch die Neigung im Falle einer Instabilität in Richtung Stütze bewegen und liegt dort stabil, sobald es eine Position in Kontankt mit der Stütze einmal erreicht hat.

In einer weiteren Ausführungsform sind in der Stütze Öffnungen und/oder Löcher und/oder Aussparungen ausgebildet. Diese können ein Be- und Entladen des Tablars erleichtern, indem sie beispielsweise Verwendung von Hilfsmitteln zum Be- und Entladen auch aus Richtung der Stütze ermöglichen.

Die Stütze kann in einer Ausführungsform so vorgesehen sein, dass sie mit der Auflagefläche einen Winkel zwischen 45° und 135° oder zwischen 60° und 120° oder zwischen 75° und 105°, oder einen Winkel von ungefähr 90° einschließt. Bei einem Winkel von etwa 90° kann ein Transportgut, z.B. ein Getränkegebinde, dessen Seitenbegrenzungen einen Winkel von ungefähr 90° mit der Standfläche einschließen, optimal abgestützt werden. Für andere Transportgegenstände, deren Seitenflächen einen anderen Winkel als etwa 90° einschließen, kann der Winkel der Stütze entsprechend anders gewählt sein.

In einer weiteren Ausführungsform verfügt das Tablar über eine, zwei, drei, vier oder mehr Flächen oder Punkte an der Oberseite des Basiselementes und zu diesen Flächen oder diesen Punkten korrespondierenden Flächen oder Punkte auf der Unterseite des Basiselementes. Diese Flächen oder Punkte können das Aufeinanderstapeln von mehreren gleichartig ausgebildeten Tablaren erleichtern, da sie dabei als Auflageflächen oder -punkte dienen können. Dabei kommen die Flächen oder Punkte der Oberseite mit den korrespondierenden Flächen oder Punkten der Unterseite in Kontakt.

Eine weitere Ausführungsform beinhaltet, dass an einer, zwei, drei, vier oder mehr Flächen oder Punkten an der Oberseite des Basiselementes je mindestens eine Erhöhung oder Aussparung angebracht oder vorgesehen ist. An den jeweils korrespondierenden Unterseiten des Tablars ist für jede Erhöhung oder Aussparung jeweils eine dazu passende Aussparung oder Erhöhung als Gegenstück zur Erhöhung oder Aussparung angebracht oder vorgesehen. Eine Stapelung von mehreren gleichartigen Tablaren gemäß der Erfindung kann damit durch die Erhöhungen, die beim Stapeln in den Aussparungen liegen, stabilisiert werden. Ein Rutschen eines Tablares vom Stapel wird dadurch verhindert oder zumindest unwahrscheinlicher gegenüber der Ausführungsform ohne die Erhöhung/Aussparung. Zusätzlich können, falls die Erhöhungen an der Unterseite des Tablares ausgebildet sind, diese einem stabilen Stand des Tablares auf manchen Fördermedien dienen. In anderen Situationen kann es vorteilhaft sein, die Erhöhungen an der Oberseite des Tablares anzubringen um die Stabilität des Tablares auf einem anderen Fördermedium zu erhöhen.

In einer weiteren Ausführungsform ist an der Unterseite des Tablars eine Vertiefung ausgebildet. Diese kann beim Stapeln mehrerer gleichartiger Tablare zur Aufnahme von über die obere Begrenzungsläche des Basiselementes überstehenden Teilen der eingeklappten Stütze dienen. Als obere Begrenzungsfläche des Basiselementes wird hierbei und im Folgenden eine gedachte horizontale Fläche bezeichnet, die durch den höchsten Punkt des Basiselementes ohne Berücksichtigung eventuell vorhandener Erhöhungen zur Stabilisierung der Stapelung verläuft, wenn es auf einem horizontalen Förder- oder Auflagemedium in Arbeitsposition liegt. Die obere Begrenzungsfläche umfasst den Flächeninhalt, der der bei Betrachtung senkrecht von oben durch das Tablar verdeckten Fläche des Mediums entspricht, auf dem das Tablar steht.

In einer weiteren Ausführungsform ist das Tablar so ausgeführt, dass die eingeklappte Stütze auf dem Basiselement so zu liegen kommt, dass Teile von ihr oder die gesamte Stütze unter der oberen Begrenzungsfläche liegen. Dies kann im Fall der vollständig unter der oberen Begrenzungsfläche des Basiselementes liegenden Stütze ein Stapeln von mehreren Tablaren gemäß der Erfindung ermöglichen, ohne dass eine weitere Vertiefung in der Tablarunterseite benötigt wird. Im Fall der nur teilweise unter der oberen Begrenzungsfläche des Basiselementes liegenden Stütze kann dies ein Stapeln mehrerer gleichartiger Tablare erleichtern, da dabei nur die überstehenden Teile durch eine Vertiefung in der Unterseite des darüber liegenden Tablares aufgenommen werden müssen. Dadurch kann diese Vertiefung an der Tablarunterseite kleiner ausfallen. Dies kann unter anderem auch die Stabilität des Tablares erhöhen.

In einer weiteren Ausführungsform ist das Basiselement zweiteilig ausgeführt. Die beiden Teile des Basiselementes sind hierbei mit einem Scharnier oder einem ähnlichen Mittel verbunden, das ein Bewegen der beiden Teile des Basiselementes relativ zueinander um eine Achse erlaubt, so dass die Auflagefläche bezüglich des auf dem Förder- oder Auflagemedium aufliegenden Teil des Basiselementes gekippt werden kann. Dies kann ein Be- und Entladen erleichtern, indem zum Beispiel die Auflagefläche in eine waagrechte Position gebracht werden kann. Zusätzlich kann dies aber auch beim Be- und Entladen eingesetzt werden, um den jeweiligen Prozess durch eine Neigung zu verstärken. Ein Beispiel dafür ist ein Entladen des Tablares durch Herunterkippen des Transportgutes durch Schrägstellung der Auflagefläche.

Eine weitere Ausführungsform beinhaltet, dass an ein, zwei oder drei Rändern der Auflagefläche die Randfläche flach ausgebildet ist. Als Randfläche der Auflagefläche an einer Seite wird hierbei der Bereich bezeichnet, der seitlich die Auflagefläche abschließt und bis zum äußersten Rand des Tablars verläuft. Ist die Randfläche flach ausgebildet, kann sie auch als Teil der Auflagefläche aufgefasst werden.

Die Flachheit von einem, zwei oder mehreren Randflächen der Auflagefläche beinhaltet insbesondere, dass an einer, zwei oder mehr Seiten des Tablars kein erhöhter Rand neben der Auflagefläche angebracht ist, der ein Be- und Entladen durch Schieben des Transportgutes aus und in dieser Richtung im Weg stünde. Dies kann ein Be- und Entladen aus und in Richtung dieser Seite oder Seiten erleichtern. Sind beispielsweise zwei gegenüberliegende Seitenränder des Tablars flach ausgeprägt, kann dies insbesondere ein Schieben des Transportgutes über ein Tablar ermöglichen. Ein weiterer beispielhafter Vorgang, der dadurch ermöglicht werden kann, ist ein Beladen von der einen Seite und entsprechendes Entladen von der anderen Seite.

In einer weiteren bevorzugten Ausführungsform sind am Basiselement Vertiefungen, Handgriffe, Haken oder andere Angriffspunkte für Maschinen vorgesehen, die einen maschinellen und/oder manuellen Transport der Tablare von und auf das Transportmedium oder ein anderes Auflagemedium erleichtern und/oder ein manuelles oder maschinelles Kippen der Auflagefläche erlauben.

Zum Kippen der Auflagefläche können Vertiefungen, Handgriffe, Haken oder andere Angriffspunkte für Maschinen vorteilhaft am oberen Teil eines zweiteilig ausgebildeten Basiselementes zum Kippen der Auflagefläche angeordnet sein. Jedoch kann auch die Auflagefläche eines einteiligen Basiselementes mit daran angebrachten Vertiefungen, Handgriffen, Haken oder anderen Angriffspunkten für Maschinen gekippt werden, da es nicht erforderlich ist, dass der unterste Teil des Basiselementes komplett auf dem Transportmedium aufliegt.

Eine weitere Ausführungsform beinhaltet, dass die Stütze in der eingeklappten Stellung und/oder ausgeklappten Stellung fixierbar ist. Diese Fixierung kann zum Beispiel durch Haken, eine Klemme, ein Scharnier mit Arretierung oder ähnliches ausgeführt werden. Vorzugsweise kann die Stütze dabei leicht und schnell fixiert werden und die Fixierung ebenso leicht und schnell wieder entfernt werden.

In einer weiteren Ausführungsform ist die Stütze am Basiselement so angebracht, dass sie im aufgeklappten Zustand auf der dem Transportgut abgewandten Seite mindestens teilweise durch das Basiselement gestützt wird. Dies kann die Stabilität der Stütze erhöhen, da Belastung gleichmäßiger verteilt werden kann. Zusätzlich kann dies ein Umknicken der Stütze in Richtung der dem Transportgut gegenüber liegenden Seite verhindern.

Eine weitere Ausführungsform beinhaltet, dass an einer, zwei oder drei Seiten des Tablars, die nicht von der klappbaren Stütze abgesichert werden, ein gegenüber der Auflagefläche erhöhter Rand angebracht ist, der das Abrutschen des Transportgutes in diese Richtung verhindern soll. Dies kann die Stabilität der Transportgegenstände zusätzlich erhöhen, da sie damit auch gegen Abrutschen in Richtungen gesichert werden können, die nicht in der gleichen Richtung wie die aufklappbare Stütze liegen.

In einer Ausführungsform ist das Basiselement des Tablars aus einem geeigneten Kunststoff ausgebildet. Dies kann vorteilhaft sein, da Kunststoffe günstig erhältlich sind, leicht in beliebige Formen gebracht werden können, über ein geringes Gewicht verfügen und hinreichend stabil für den Transport von Gegenständen, insbesondere Getränkegebinden, sind. Auch die Stütze kann aus einem geeigneten Kunststoff angefertigt sein. Dies kann überdies den Vorteil haben, dass ein Tablar aus Kunststoff mit Kunststoffstütze nicht so leicht durch Nässe beschädigt werden kann.

Weitere Aspekte von möglichen Ausführungsformen werden anhand der Figuren deutlich. Dabei zeigt:
- Fig. 1 a-d: eine Ausführungsformen der Erfindung;
- Fig. 2 a-b: eine weitere Ausführungsform der Erfindung;
- Fig. 3 a-b: Stapel von mehreren gleichartigen, gemäß einer Ausführungsform der Erfindung gestalteten Tablaren;
- Fig. 4 a-b: weitere mögliche Ausführungsformen der Erfindung;
- Fig. 5 a-d: eine mögliche Verwendung für ein Tablar gemäß der Erfindung;

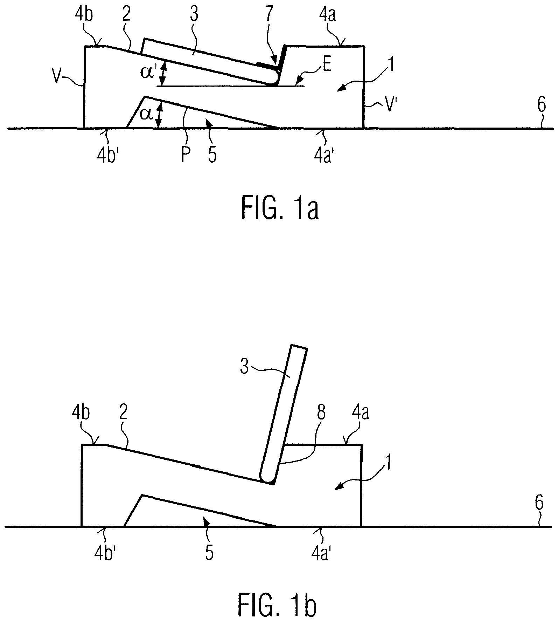

Die Figuren 1a bis 1 c zeigen eine Ausführungsform der Erfindung.

Figur 1a zeigt ein Tablar gemäß einer ersten Ausführungsform der Erfindung. Das dargestellte Tablar hat ein Basiselement 1 mit einer in diesem Beispiel geneigt ausgebildeten Auflagefläche 2. Es verfügt über eine klappbare Stütze 3, die hier im eingeklappten Zustand dargestellt ist. Dabei kann die Stütze 3 gemäß der Erfindung wie hier dargestellt so auf dem Basiselement 1 aufliegen, dass Teile von ihr unter der oberen Begrenzungsfläche des Basiselementes 1 liegen. Zudem verfügt das Tablar hier beispielhaft über eine Vertiefung 5 in der Tablarunterseite zur Aufnahme von überstehenden Teilen der Stütze 3 eines weiteren gleichartigen Tablars im Fall, dass mehrere gleichartige Tablare gestapelt werden. Auf der Oberseite und der Unterseite des Tablars kann man in diesem Beispiel horizontal ausgebildete Flächen 4a, 4b, 4a', 4b' erkennen, durch die ein Stapeln von mehreren Tablaren gemäß der Erfindung ermöglicht wird. Hierbei sind in diesem Fall zwei Flächen 4a, 4b an der Oberseite und zwei dazu korrespondierende Flächen 4a', 4b' an der Unterseite ausgebildet. Auch andere Anzahlen von Flächen oder Punkte können bei Tablaren gemäß der Erfindung ausgebildet sein (hier nicht gezeigt).

Wie man in Figur 1a erkennt, kann ein Tablar gemäß der Erfindung über vertikale Flächen V, V' an den Seiten des Tablars verfügen, die eine klare Begrenzung des Tablares zur Folge haben und dabei auch zu einer platzsparenden Stapelbarkeit von mehreren gleichartigen Tablaren beitragen können, da mehrer Tablare damit Stapel mit senkrechten, glatten Wänden ergeben.

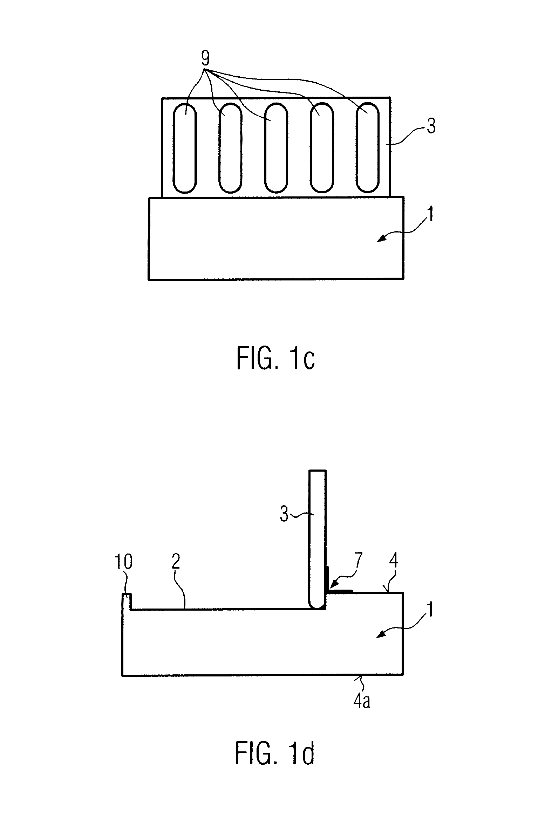

Zusätzlich kann in möglichen Ausführungsformen, wie beispielhaft in Figur 1 gezeigt, die Neigung der Auflagefläche 2 (in etwa) der Neigung einer Fläche P in der Vertiefung 5 der Tablarunterseite entsprechend gewählt sein, wobei die Auflagefläche 2 parallel zur Fläche P der Vertiefung 5 verläuft. Damit sind der Winkel α zwischen dem Transportmedium 6 und der Neigung der Vertiefung und der Winkel α' zwischen einer gedachten parallel zum Transportmedium liegenden Ebene E und der Auflagefläche 2 gleich groß. Auch eine unterschiedliche Neigung der Auflagefläche 2 und der Neigungen der Vertiefung 5 ist möglich (hier nicht gezeigt) und kann abhängig von der Ausführungsform der Stütze 3 vorteilhaft sein, wenn mehrere gleichartige Tablare gestapelt werden sollen.

Das Tablar kann, wie jede andere Ausführungsform eines Tablares gemäß der Erfindung, zum Beispiel durch Kunststoffspritztechnik hergestellt sein und dadurch über ein sehr geringes Gewicht verfügen. In dieser in Figur 1 gezeigten Ausführungsform sind die nicht durch die Stütze 3 im aufgeklappten Zustand begrenzten Seiten der Auflagefläche beispielhaft flach ausgeführt, so dass ein Be- und Entladen aus drei Richtungen ermöglicht wird. In der in Figur 1a gezeigten Ausführungsform erfolgt die Befestigung der klappbaren Stütze mit einem Scharnier 7. Jedes andere Verbindungsmittel, das eine Relativbewegung zwischen der Stütze 3 und der Auflagefläche 2 um eine Achse ermöglicht, kann ebenfalls verwendet sein (hier nicht gezeigt).

Das Tablar befindet sich in der in Figur 1 dargestellten Situation auf einem Transportmedium 6, zum Beispiel einem Förderband oder einer Rollenführstrecke.

Figur 1 b zeigt das Tablar aus Figur 1 a mit aufgeklappter Stütze 3, die im aufgeklappten Zustand einen Winkel von 90° mit der Auflagefläche 2 einschließt. Hier kann man gut erkennen, dass im gewählten Beispiel die Neigung der Auflagefläche 2 zur Stütze 3 hin verläuft. Wird beispielsweise nun ein Transportgut auf die Auflagefläche 2 gelegt, rutscht es durch die Neigung der Auflagefläche 2 in Richtung Stütze 3, und liegt dann stabil. In weiteren Ausführungsformen kann die Auflagefläche 2 auch ohne Neigung angeordnet sein (in Figur 1 b nicht gezeigt).

Die aufgeklappte Stütze 3 kann gleichzeitig wie in diesem Beispiel teilweise durch einen Teil des Basiselementes 8 gestützt werden, der auf der dem Transportgut gegenüberliegenden Seite liegt. Dieser Teil 8 kann näherungsweise senkrecht zur Auflagefläche 2 angeordnet sein, was dann auch zu einer näherungsweise senkrechten Anordnung der Stütze 3 in der aufgeklappten Position führt. Auch eine Anordnung der Stütze 3 mit einem anderen Winkel zwischen Auflagefläche 2 und Stütze 3 kann erfolgen (hier nicht gezeigt).

Figur 1c zeigt eine weitere Ausführungsform der Erfindung, in der Öffnungen 9 in der aufgeklappten Stütze 3 ausgeführt sind. Diese können zum Beispiel bei Be- und Entladen hilfreich sein, da sie Zugriff auf das Transportgut durch Stäbe oder ändere Hilfsmittel zum Be- und Entladen auch aus der Richtung erlauben, aus der sonst ein Zugriff durch die Stütze 3 verhindert würde. Die Öffnungen 9 können dabei in Form und Größe den Bedürfnissen aufgrund der transportierten Gegenstände oder der Hilfsmittel zum Be- und Entladen angepasst sein.

Figur 1d zeigt ein Tablar gemäß einer weiteren Ausführungsform der Erfindung. Hierbei verfügt das Tablar über eine horizontale Auflagefläche 2, die auf der der Stütze 3 gegenüberliegenden Seite durch einen erhöhten Rand 10 begrenzt wird, der ein Abrutschen des Transportgutes in diese Richtung verhindern soll. Gleichzeitig sind die beiden anderen Seitenflächen der Auflagefläche 2 flach ausgebildet, so dass ein Be- und Entladen aus diesen Richtungen durch Schieben des Transportgutes von der Seite her ermöglicht wird. In anderen Ausführungsformen kann auch die auf der Stütze 3 gegenüberliegende Seite der Auflagefläche 2 flach ausgebildet sein und/oder die beiden anderen Seitenflächen der Auflagefläche mit Rand ausgebildet sein (nicht gezeigt). Die klappbare Stütze ist mit dem Basiselement durch ein Scharnier 7 verbunden. Das Scharnier kann auch durch andere Mittel ersetzt sein, die ein Bewegen der Stütze 3 relativ zur Auflagefläche 2 um eine Achse ermöglichen und/oder arrettierbar sein (hier nicht sichtbar).

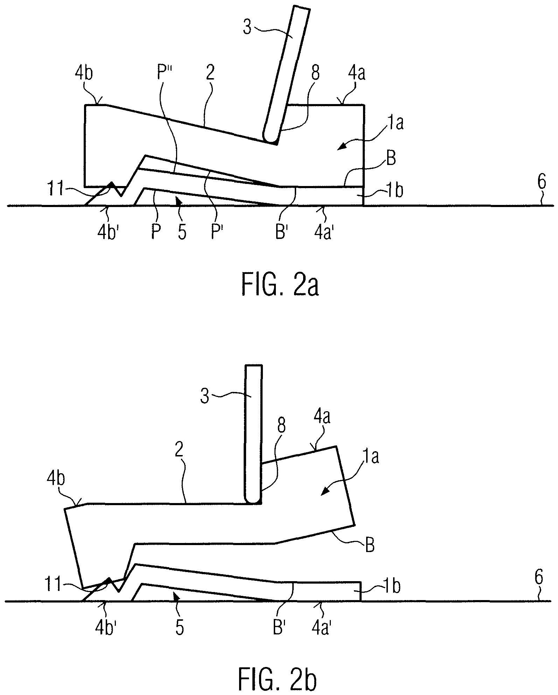

Figur 2 zeigt eine weitere Ausführungsform der Erfindung, bei der das Basiselement 1 zweiteilig ausgeführt ist. Die beiden Teile 1a, 1 b sind dabei beispielhaft durch ein Scharnier 11 verbunden. Jede andere Verbindung durch ein Mittel, das eine Bewegung der beiden Teile des Basiselements 1 a, 1 b relativ zueinander um eine Achse ermöglicht, kann jedoch an Stelle des Scharniers 11 verwendet werden (hier nicht gezeigt). Zusätzlich kann - wie hier gezeigt - das Scharnier 11 auf einem sich zum oberen Teil des Basiselementes 1a verjüngenden Teil des unteren Teiles des Basiselementes 1b angeordnet sein. Dies kann ein Kippen um die Scharnierachse erleichtern.

Auch kann man in Figur 2 sehen, dass zwischen den beiden Basiselementen 1a, 1b auf der Tablarseite, die in diesem Beispiel der durch ein Scharnier 11 verbundenen Seite parallel gegenüber verläuft, eine breite Fläche B (mit einer Ausdehnung von mehr als 10 % oder 20 % der Ausdehnung des Basisteils, beides in Richtung quer zum Scharnier oder einer entsprechenden Drehachse der zwei Teile gemessen) des oberen Teiles des Basiselementes 1a vorhanden sein kann, die auf dem unteren Teil des Basiselementes 1 b aufliegt und die dazu führen kann, dass die Last während des Transportes in der Grundstellung des Tablares möglichst gleichmäßig auf die Fläche B' des unteren Teiles des Basiselementes 1b und damit auf den unteren Teil des Basiselementes 1b und auch auf das Fördermedium verteilt wird. Bevorzugt sind die beiden Flächen B und B' horizontal angeordnet.

Im Falle eines zweiteiligen Basiselementes 1 können die Auflagefläche 2 und die Fläche P der Vertiefung 5 parallel angeordnet sein. In einer bevorzugten Ausführungsform sind sie nicht parallel angeordnet, da durch die zwei Teile des Basiselementes 1a, 1b auch Begrenzungen zwischen den Basiselementen vorhanden sind, die im Raum so verlaufen müssen, dass die Teile des Basiselementes 1a und 1 b geeignet aufeinander zu liegen kommen.

Eine mögliche Ausführungsform, die in Figur 2a sichtbar ist, umfasst eine parallele Anordnung der Auflagefläche 2 und der Fläche P', die eine Begrenzungsfläche für den oberen Teil des Basiselementes 2a darstellt. Zusätzlich können, wie beispielhaft in Figur 2a dargestellt, auch ein Teil P" der Oberfläche des unteren Teiles des Basiselementes 1b und die Fläche P der Vertiefung 5 des unteren Basiselementes in etwa parallel verlaufen. Hierbei ist, wie in anderen Ausführungsformen auch, bevorzugterweise die Neigung der Fläche P' größer oder gleich der Neigung der Fläche P", so dass die beiden Flächen P' und P" nicht aufeinanderliegen, einen konstanten Abstand haben oder genau passend aufeinander aufliegen und kein Abstand zwischen den beiden Teilen des Basiselementes 1a, 1b vorhanden ist, der zu Instabilität führen könnte. Durch die zuvor beschriebene Anordnung kann die Gewichtsüberttragung vom oberen Basiselement 1a auf das untere Basiselement 1 b teilweise über die Flächen B und B' erfolgen.

Es existieren auch Auführungsformen der Erfindung, in denen keine, zwei, drei oder vier der Neigungen der Flächen 2, P, P' und P" parallel sind. Die Neigung der Fläche P' ist bevorzugterweise größer als die Neigung der Fläche P", so dass diese beiden Flächen nicht aufeinanderliegen, einen konstanten Abstand haben oder genau passend aufeinander zu liegen kommen und kein Abstand zwischen den beiden Teilen des Basiselementes 1a, 1b vorhanden ist. Dadurch kann die Gewichtsübertragung vom oberen Basiselement 1a auf das untere Basiselement 1 b teilweise über die Flächen B und B' erfolgen. Es ist aber auch möglich, dass in einigen Ausführungsformen die Neigung der Fläche P" größer als die Neigung der Fläche P' ist und trotzdem die Stabilität des Tablars erhalten ist.

In Figur 2a sieht man ein Tablar mit einem zweiteiligen Basiselement 1a, 1b in der Grundstellung, die während des Transportes eingenommen wird und solange beibehalten wird, wie keine Kraft auf den oberen Teil des Basiselementes 1 a wirkt.

Figur 2b zeigt das Tablar, wenn sich das obere Teil des Basiselementes 1a in gekippter Haltung befindet. Die Auflagefläche 2 ist hier gegenüber der Grundstellung gekippt und in diesem Beispielsfall in eine waagrechte Position gebracht. Diese Position kann beim Beladen des Tablars vorteilhaft sein, da sie ermöglichen kann, das Transportgut horizontal auf das Tablar aufzuschieben.

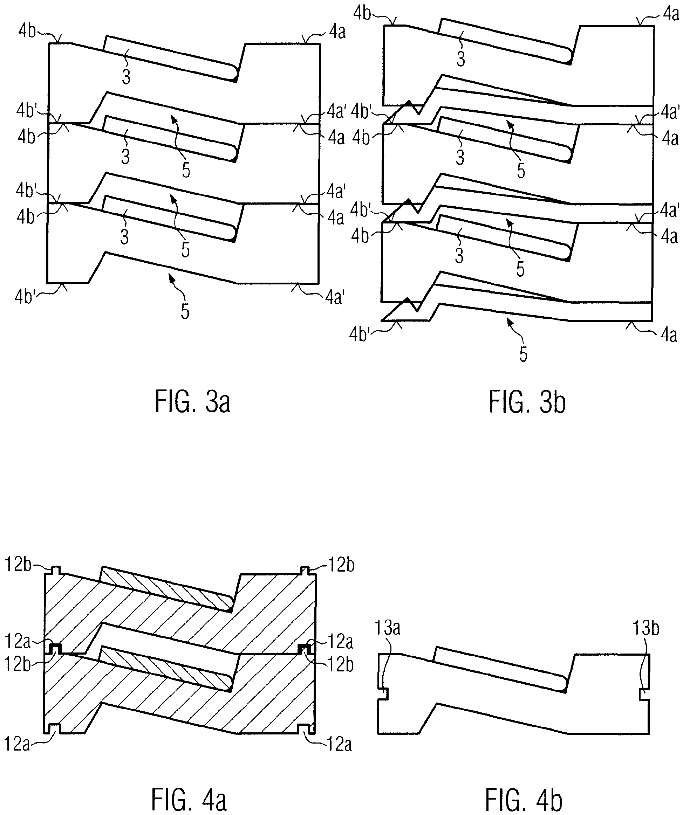

Figur 3 zeigt die Stapelung von mehreren Tablaren gemäß den Ausführungsformen der Figuren 1 und 2 der Erfindung.

Dabei zeigt Figur 3a einen Stapel von mehreren in Figur 1a und 1b beschriebenen Tablaren. Die Vertiefungen in der Unterseite 5 eines jeden Tablares können die über die obere Begrenzungsfläche überstehenden Teile der jeweils darunter liegenden Stütze 3 aufnehmen. Zusätzlich kann man erkennen, dass auch Teile der Stütze 3 in dieser Ausführungsform unter der oberen Begrenzungsfläche des Basiselementes 1 zu liegen kommen. Ferner erkennt man korrespondierende hier horizontal ausgebildete Flächen an Ober- und Unterseite 4a, 4b, 4a', 4b' jedes Tablares, durch die ein Stapeln erleichtert wird.

Figur 3b zeigt einen Stapel mehrerer in Figur 2 beschriebener Tablare. Auch Figur 2 zeigt den Vorteil von Flächen 4a, 4b, 4a', 4b' an Ober- und Unterseite des Tablars, die hier horizontal ausgebildet sind.

Figur 4a zeigt einen vertikalen Querschnitt durch das Tablar, in einer Richtung senkrecht zur Stützfläche. Die Tablare sind in diesem Fall so gefertigt, dass Stapel von gleichartigen Tablaren zusätzlich stabilisiert werden. Während in diesem Fall auf den Flächen auf der Unterseite des Tablars Aussparungen 12a ausgebildet sind, sind auf den Flächen auf der oberen Begrenzungsfläche des Tablars Erhöhungen 12b ausgebildet, die in die Vertiefungen passen und damit die Stapel von gleichartigen Tablaren stabilisieren.

Figur 4b zeigt eine mögliche Ausführungsform mit als Handgriffen geeigneten Vertiefungen 13a, 13b, die einen manuellen Transport des Tablars von und auf das Förder- oder Auflagemedium erleichtern: durch die Vertiefung 13a und eine entsprechend auf der gegenüberliegenden Seite angebrachten Vertiefung 13b verfügt das Tablar über Angriffspunkte für den manuellen Transport des Tablars von und auf das Förder- oder Auflagemedium. Statt Vertiefungen könnten hierfür auch andersartige Handgriffe, Haken oder andere Angriffspunkte für Maschinen verwendet werden (nicht gezeigt).

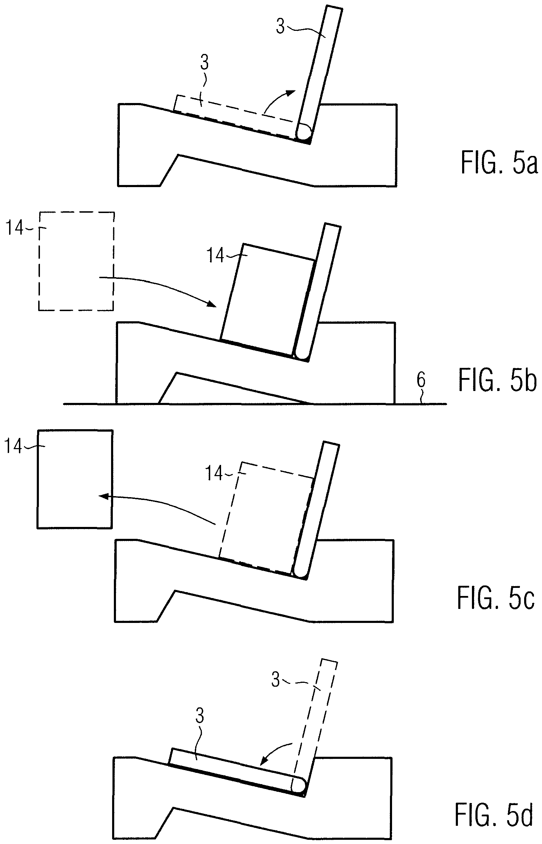

Figur 5 zeigt Schritte eines beispielhaften Transportablaufes unter Verwendung eines Tablars gemäß der Erfindung.

Hierbei zeigt Figur 5a wie in einem ersten Schritt die Stütze 3 aufgeklappt wird.

In Figur 5b wird in einem zweiten Schritt das vorgesehene Transportgut 14 auf das Tablar befördert und kann dann auf dem Tablar auf einem Transportmedium 6 transportiert werden. Eine Beladung kann auch durch Kippen der Auflagefläche während des Beladens erleichtert werden (hier nicht gezeigt).

Figur 5c zeigt den Schritt des Entladens des Tablars. Auch hier ist wieder ein mögliches Kippen der Auflagefläche nicht gezeigt.

In Figur 5d wird in einem nächsten Schritt das Einklappen der Stütze 3 gezeigt.

Anschließend können die einzelnen Tablare gemäß der Erfindung zur Aufbewahrung aufeinander gestapelt werden, wie zum Beispiel in Figur 3a dargestellt.

## Patentansprüche

1. Tablar zum Transport von Gütern (14), insbesondere Getränkegebinden, auf einem Transportmedium (6), mit einem Basiselement (1) mit einer Auflagefläche (2) für das Transportgut (14), **gekennzeichnet dadurch, dass** an dem Basiselement (1) eine klappbare Stütze (3) zur Stützung des Transportgutes (14) angebracht ist.

2. Tablar nach Anspruch 1, **dadurch gekennzeichnet, dass** die Auflagefläche (2) zur Stütze (3) hin geneigt ausgebildet ist.

3. Tablar nach Anspruch 1 oder 2, **dadurch gekennzeichnet, dass** in der Stütze (3) Öffnungen (9) und/oder Löcher und/oder Aussparungen ausgebildet sind.

4. Tablar nach einem der Ansprüche 1 bis 3, **dadurch gekennzeichnet, dass** die Stütze mit der Auflagefläche einen Winkel zwischen 45° und 135° oder zwischen 60° und 120° oder zwischen 75° oder 105° oder einen Winkel von ungefähr 90° einschließt.

5. Tablar nach einem der Ansprüche 1 bis 4, **dadurch gekennzeichnet, dass** an dem Tablar eine, zwei, drei, vier oder mehr Flächen oder Punkte an der Oberseite (4a, 4b) und dazu korrespondierende Flächen oder Punkte an der Unterseite (4a', 4b') ausgebildet sind.

6. Tablar nach einem der Ansprüche 1 bis 5, **dadurch gekennzeichnet, dass** an einer, zwei, drei, vier oder mehr Flächen oder Punkten an der Oberseite (4a, 4b) des Basiselementes (1) je mindestens eine Erhöhung (12b) oder Aussparung angebracht ist und an der oder den korrespondierenden Flächen oder Punkten auf der Unterseite des Basiselementes (4a', 4b') dazu passende Aussparungen (12a) oder Erhöhungen als Gegenstücke zu den jeweiligen Erhöhungen (12b) oder Aussparung angebracht sind.

7. Tablar nach einem der Ansprüche 1 bis 6, **dadurch gekennzeichnet, dass** an der Unterseite des Tablars eine Vertiefung (5) ausgebildet ist.

8. Tablar nach einem der Ansprüche 1 bis 7, **dadurch gekennzeichnet, dass** die eingeklappte Stütze (3) auf dem Basiselement (1) so zu liegen kommt, dass sie oder Teile von ihr unter der oberen Begrenzungsfläche des Basiselementes (1) liegen.

9. Tablar nach einem der Ansprüche 1 bis 8, **dadurch gekennzeichnet, dass** das Basiselement (1) zweiteilig ausgebildet ist, und die beiden Teile (1a, 1 b) durch ein Scharnier (11) oder ein anderes Mittel, das eine Bewegung der zwei Teile des Basiselements um eine Achse ermöglicht, verbunden sind, so dass die Auflagefläche (2) gegenüber dem auf dem Transportmedium (6) oder einer sonstigen Auflagefläche aufliegenden Teil des Basiselementes (1 b) gekippt werden kann.

10. Tablar nach einem der Ansprüche 1 bis 9, **dadurch gekennzeichnet, dass** an, ein, zwei oder drei außen gelegenen Rändern des Tablars die Randfläche flach ausgebildet ist, so dass ein Be- und Entladen über diese Seite oder Seiten ermöglicht wird.

11. Tablar nach einem der Ansprüche 1 bis 10, **dadurch gekennzeichnet, dass** an dem Basiselement (1) Handgriffe, Vertiefungen, Haken oder Angriffspunkte für Maschinen vorgesehen sind, die ein manuelles oder maschinelles Kippen der Auflagefläche (2) oder einen manuellen oder maschinellen Transport der Tablare von und auf das Transportmedium oder ein sonstiges Auflagemedium erleichtern.

12. Tablar nach einem der Ansprüche 1 bis 11, **dadurch gekennzeichnet, dass** die Stütze (3) in der eingeklappten und/oder ausgeklappten Position fixierbar ist.

13. Tablar nach einem der Ansprüche 1 bis 12, **dadurch gekennzeichnet, dass** die aufklappbare Stütze (3) am Basiselement (1) so angebracht ist, dass die Stütze (3) auf der dem Transportgut (14) abgewandten Seite mindestens teilweise durch das Basiselement (1) gestützt wird.

14. Tablar nach einem der Ansprüche 1 bis 13, **dadurch gekennzeichnet, dass** an einer, zwei oder drei Seiten des Tablars, in deren Richtung das Transportgut (14) nicht von der klappbaren Stütze gestützt wird, ein erhöhter Rand (10) angebracht ist, der das Abrutschen des Transportgutes (14) in diese Richtungen verhindert.

15. Tablar nach einem der Ansprüche 1 bis 14, **dadurch gekennzeichnet, dass** das Basiselement (1) aus Kunststoff ausgebildet ist.
